# EUROPÄISCHE PATENTSCHRIFT

(11) **EP 2 433 158 B1**
(45) Veröffentlichungstag und Bekanntmachung des Hinweises auf die Patenterteilung: **23.11.2022**
(21) Anmeldenummer: 09776600.0
(22) Anmeldetag: 11.05.2009
(51) Int. Cl.: G01V 1/52, G01V 1/00, G01V 1/44, G01V 11/00, G01V 1/40

(54) **VERFAHREN UND VORRICHTUNG ZUR SEISMISCHEN ERKUNDUNG EINER GEOLOGISCHEN FORMATION**
METHOD AND DEVICE FOR THE SEISMIC EVALUATION OF A GEOLOGICAL FORMATION
PROCÉDÉ ET DISPOSITIF D'EXPLORATION SISMIQUE D'UNE FORMATION GÉOLOGIQUE

(43) Veröffentlichungstag der Anmeldung: 28.03.2012
(73) Patentinhaber: Helmholtz-Zentrum Potsdam Deutsches GeoForschungsZentrum - GFZ, 14473 Potsdam (DE)
(72) Erfinder: GIESE, Rüdiger, 14715 Milower Land (DE); JAKSCH, Katrin, 14959 Trebbin (DE); JURCZYK, Andreas, 14806 Belzig (DE); MIKULLA, Stefan, 14473 Potsdam (DE); MEYER, Stefan, 14469 Potsdam (DE); WELL, Markus, 14482 Potsdam (DE); KRÜGER, Kay, 14548 Schwielowsee, OT Geltow (DE)
(74) Vertreter: v. Bezold & Partner Patentanwälte - PartG mbB
(86) Internationale Anmeldenummer: PCT/EP2009/003334
(87) Internationale Veröffentlichungsnummer: WO 2010/130269

(56) Entgegenhaltungen:
- EP-A1- 0 911 649
- EP-B1- 2 419 763
- FR-A1- 2 674 030
- FR-A1- 2 698 967
- GB-A- 1 221 471
- US-A- 3 542 150
- US-A- 3 881 168
- US-A- 4 632 212
- US-A- 4 702 343
- US-A- 4 833 658
- US-A- 5 016 727
- US-A- 5 229 554
- US-A- 5 521 337
- US-A1- 2002 062 992
- US-A1- 2003 133 361
- US-A1- 2006 254 767
- US-A1- 2007 056 794
- US-A1- 2008 115 574
- SOHMER M ET AL: "(S) PWD - Entwicklung eines hochauflösenden Systems für seismische Vorauserkundung in der Tiefborhtechnik", DGMK/ÖGEW-FRÜHJAHRSTAGUNG DES FACHBEREICHES AUFSUCHUNG UND GEWINNUNG AM 27. UND 28. APRIL 2009; [DGMK, DEUTSCHE WISSENSCHAFTLICHE GESELLSCHAFT FÜR ERDÖL, ERDGAS UND KOHLE], DGMK, DE, 27. April 2009 (2009-04-27), Seiten 113-121, XP008121551, ISBN: 978-3-936418-90-3

## Beschreibung

Die Erfindung betrifft ein Verfahren zur seismischen Erkundung einer Umgebung eines Bohrlochs in einer geologischen Formation, und eine Seismikeinrichtung, die zur Durchführung eines derartigen Verfahrens konfiguriert ist. Anwendungen der Erfindung sind in der unterirdischen oder unterseeischen Bohrlochseismik gegeben.

Die genaue Kenntnis der geologischen Verhältnisse in der Umgebung von Erkundungs- oder Produktionsbohrungen sind entscheidend für den wirtschaftlichen Erfolg und die Sicherheit von Geotechnik. Trotz vieler Fortschritte im Bereich der Bohrlochgeophysik gibt es noch erhebliche Beschränkungen hinsichtlich der Möglichkeiten einer Prognose des Bohrprozesses. Dies hat z. B. zur Folge, dass kostenaufwändige Mehrfachbohrungen durchgeführt werden müssen, Bohrgerät und große Mengen an Bohrflüssigkeit verloren gehen. Neben der Sicherheit sind die Kosten für viele neuartige und vielversprechende Nutzungen des geologischen Untergrundes das entscheidende Kriterium für den wirtschaftlichen Erfolg. Ganz besonders trifft das für die Tiefengeothermie zu. Die hohen Erschließungskosten sind bis heute das wesentliche Hindernis einer breiten Nutzung geothermischer Energie aus großen Tiefen.

Derzeit wird für die seismische Erkundung in tiefen Bohrungen in geologischen Formationen das SWD-Verfahren ("Seismic While Drilling") oder das VSP-Verfahren ("Vertical Seismic Profiling") genutzt, z. B. um ein vertikales seismisches Profil zu erfassen. Dabei wird eine seismische Quelle im Bohrloch verwendet, während die Registrierung der seismischen Wellen an der Erdoberfläche erfolgt. Ein Vorteil der Verfahren ist die fortschreitende Erkundung während des Abteufens der Bohrung. Zudem kann z. B. das SWD-Verfahren durch die Nutzung des Bohrmeißels als seismische Quelle während der Bohrung angewendet werden. Des Weiteren kann mit den herkömmlichen Verfahren nur ein Frequenzband bis ca. 200 Hertz verwendet werden. Damit ergibt sich als entscheidender Nachteil ein begrenztes räumliches Auflösungsvermögen, das sich mit zunehmender Bohrteufe wegen der längeren Laufwege der seismischen Wellen noch deutlich verschlechtert. So können spezielle Zielhorizonte wie z. B. Thermalwasserschichten für die geothermische Nutzung meist nicht mehr aufgelöst werden.

Anstelle des Bohrmeißels können seismische Bohrlochquellen genutzt werden, um geophysikalische Eigenschaften der geologischen Schichten zu bestimmen, die sich in der Umgebung eines Bohrlochs befinden. Eine Bohrlochquelle wird in das Bohrloch eingeführt und generiert elastische Wellen, die in die Umgebung der Einwirkungsstelle der Quelle in das Bohrlochumfeld abgestrahlt werden. Die Wellen werden von Empfängern wie z.B. Geophonen oder Hydrophonen an verschiedenen Orten registriert, nachdem sie die Untergrundschichten durchlaufen haben und von Schichtgrenzen reflektiert oder von Materialinhomogenitäten gestreut wurden. Nach der Auswertung und Bearbeitung der Wellenregistrierungen können der Ort und die Ausdehnung reflektierender Schichtgrenzen und Materialparameter der Schichten bestimmt werden.

Es sind verschiedene messtechnische Anordnungen in der Bohrlochseismik bekannt. Bei der sog. Crosshole-Seismik sind die Quelle und die Empfänger in unterschiedlichen Bohrlöchern angeordnet. Eine andere Anordnung sieht vor, dass eine Bohrlochquelle an mehreren Stellen im Bohrloch wirkt und die Empfänger an der Erdoberfläche positioniert sind (RVSP, "reverse vertical seismic profiling"). Weiterhin können die Empfänger auch im gleichen Bohrloch wie die Quelle angeordnet sein ("long spacing sonic"). Mit diesem Verfahren wird vorwiegend das unmittelbare Bohrlochumfeld erkundet.

Des Weiteren sind verschiedene Typen von Bohrlochquellen bekannt (siehe z. B. H. C. Hardee in "Geophysical Prospecting" Bd. 31, 1983, S. 57-71), die sich in Bezug auf die zeitliche Anregungsfunktion, wie z. B. Impuls- oder Schlagquellen und Vibrationsquellen, oder in Bezug auf die generierten Wellentypen unterscheiden. Grundsätzlich werden durch eine seismische Quelle vom Ort der Einwirkung in ein elastisches Medium immer gleichzeitig seismische Longitudinalwellen (P-Wellen) und seismische Transversalwellen (S-Wellen) abgestrahlt. Obwohl für die Auswertung der seismischen Messungen beide Wellentypen von Interesse sind, kann die zeitliche Überlagerung der Wellentypen bei der Anregung und Registrierung der in der geologischen Formation reflektierten oder gebrochenen Wellen jedoch zu Fehlern führen.

Aus US 4 103 756 ist eine seismische Bohrlochquelle bekannt, die P- und S-Wellen erzeugt. In US 4 207 961 ist ein Anregungsverfahren beschrieben, das bevorzugt S-Wellen erzeugt. US 4 569 412 offenbart die Konstruktion für eine seismische Bohrlochimpulsquelle mit einem kontrollierbaren Anregungsspektrum. Eine kontrollierbare Implosionsquelle, die als seismische Impulsquelle für die Erkundung eingesetzt werden kann, ist aus US 4 805 726 bekannt. US 4 874 061 offenbart einen Umlaufgenerator, der als Vibrationsquelle wirkt und bevorzugt elliptisch polarisierte S-Wellen generiert. Des Weiteren wurden seismische Vibrationsquellen mit magnetostriktiver oder piezoelektrischer Anregung beschrieben (z.B. US 5 115 880, piezoelektrische seismische Vibrationsquelle mit einer hydraulischen Verstärkung, WO 2006/051298).

Mit den herkömmlichen Impuls- und Vibrationsquellen für die Bohrlochseismik können bevorzugt bestimmte Wellentypen angeregt werden, wobei der Grad der Bevorzugung von den konkreten Ankopplungsbedingungen und der unmittelbaren geologischen Umgebung abhängt. Es ist jedoch keine Quelle bekannt, mit der einstellbar eine Variation der bevorzugten Anregung einzelner Wellentypen vorgenommen werden kann. Ein weiterer Nachteil der herkömmlichen Quellen besteht darin, dass die Energieabstrahlung von elastischen Wellen hinsichtlich der Richtungswirkung nicht beeinflusst werden kann. Damit besteht beim Messprozess keine Einflussmöglichkeit auf die bevorzugte Auswahl besonders interessanter Raumbereiche.

Aus US 4 632 212 A ist eine Quelleneinrichtung zur seismischen Erkundung einer Umgebung eines Bohrlochs in einer geologischen Formation bekannt, wobei die Quelleneinrichtung zwei gegenüberliegende Quellen und eine dazwischenliegende Ablenkplatte aufweist. Durch eine Erregung der Quellen mit ähnlicher Frequenz aber mit einer Phasenverschiebung von 180 Grad, wird eine Scherwelle im Bohrloch erzeugt.

Weitere Techniken der Bohrlochseismik sind aus US 2006/254767 A1, GB 1 221 471 A, US 5 016 727 A, US 3 542 150 A, US 5 521 337 A, FR 2 674 030 A1, FR 2 698 967 A1 und EP 2 419 763 B1 (Stand der Technik gemäß Art 54(3) EPÜ) bekannt.

Die Aufgabe der Erfindung ist es, ein verbessertes Verfahren zur seismischen Erkundung bereitzustellen, mit dem Nachteile und Beschränkungen der herkömmlichen Techniken überwunden werden können und das sich insbesondere durch eine erhöhte Flexibilität in Bezug auf die Auswahl eines bestimmten Untersuchungsbereiches in der geologischen Formation und/oder die Auswahl bestimmter Wellentypen auszeichnet. Des Weiteren ist es die Aufgabe der Erfindung, eine verbesserte Seismikeinrichtung bereitzustellen, mit der Nachteile herkömmlicher Techniken überwunden werden und die sich durch einen erweiterten Anwendungsbereich auszeichnet.

Diese Aufgaben werden durch ein Verfahren zur seismischen Erkundungen und eine Seismikeinrichtung mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt der Erfindung wird die genannte Aufgabe insbesondere durch die technische Lehre gelöst, ein Verfahren zur seismischen Erkundung zur Untersuchung einer geologischen Formation, in der ein Bohrloch gebildet ist, bereitzustellen, bei dem mit einer im Bohrloch angeordneten Quelleneinrichtung, die mindestens zwei seismische Quellen umfasst, seismische Wellen mit einer vorbestimmten Abstrahlcharakteristik erzeugt und nach einem Lauf durch die geologische Formation mit einer Registriereinrichtung registriert werden. Die Registriereinrichtung erfasst die seismische Antwort der geologischen Formation, indem die seismischen Wellen nach mindestens einer Reflexion, Brechung und/oder Streuung in der geologischen Formation gemessen werden.

Gemäß einem zweiten Gesichtspunkt der Erfindung wird die genannte Aufgabe insbesondere durch die technische Lehre gelöst, eine Seismikeinrichtung bereitzustellen, die zur seismischen Erkundung einer geologischen Formation in einer Umgebung eines Bohrlochs ausgebildet ist und eine Quelleneinrichtung und eine Registriereinrichtung umfasst. Die Quelleneinrichtung ist zum Betrieb in dem Bohrloch eingerichtet und weist mindestens zwei seismische Quellen auf. Die seismischen Quellen sind konfiguriert, in der geologischen Formation seismische Wellen mit einer vorbestimmten Abstrahlcharakteristik zu erzeugen. Die Registriereinrichtung ist konfiguriert, die seismischen Wellen in der geologischen Formation zu detektieren.

Der Begriff "Abstrahlcharakteristik" bezeichnet insbesondere einen abgegrenzten geometrischen Bereich, in dem seismische Schwingungen erzeugt werden. Außerhalb dieses Bereiches werden keine oder derart schwache seismische Schwingungen erzeugt, dass keine Beiträge zu den ausgewerteten Signalen der Registriereinrichtung geliefert werden. Die Abstrahlcharakteristik wird auf einen gewünschten Untersuchungsbereich gerichtet, der allgemein einen abgrenzbaren Teilbereich, wie z. B. eine bestimmte Schicht, einen Hohlraum und/oder einen Substanzeinschluss in der geologischen Formation umfasst. Die Abstrahlcharakteristik der Quelleneinrichtung wird durch die Überlagerung der von den seismischen Quellen erzeugten Schwingungen geformt. Mit dem Begriff "Abstrahlcharakteristik" können alternativ oder zusätzlich Schwingungseigenschaften (wie z. B. Frequenz, Phase, Amplitude oder P- oder S-Schwingungstyp) der in der geologischen Formation erzeugten seismischen Wellen bezeichnet werden.

Die Bereitstellung der Quelleneinrichtung mit mindestens zwei seismischen Quellen hat des Weiteren den Vorteil, dass trotz des beschränkten Platzangebots im Bohrloch genügend seismische Energie in das Medium eingekoppelt werden kann. In Abhängigkeit von den konkreten Anwendungsbedingungen können mehr als zwei seismische Quellen, z. B. drei, vier, fünf, acht, zehn oder mehr seismische Quellen vorgesehen sein. Jede seismische Quelle stellt ein eigenständiges Modul dar, welches zur Schwingungserzeugung eingerichtet ist. Die seismische Quelle enthält als Schwingungsantrieb mindestens einen Aktuator und des Weiteren mechanische Komponenten zur Halterung und Ausrichtung des mindestens einen Aktuators.

Vorteilhafterweise wird eine seismische Erkundung des geologischen Umfeldes einer Bohrung mit erhöhter Ortsauflösung, z. B. bis in den dm-Bereich und in großen Tiefen, z. B. tiefer als 3000 m ermöglicht. Im Unterschied zu herkömmlichen geophysikalischen Bohrloch-Messverfahren kann erstmals ein differenziertes dreidimensionales Abbild einer größeren Bohrlochumgebung, z. B. bis zu 100 m erzeugt werden kann. Dies ermöglicht, den Bohrfortschritt den tatsächlichen geologischen Gegebenheiten anzupassen.

Die Seismikeinrichtung hat gemäß einer bevorzugten Ausführungsform der Erfindung eine langgestreckte Form mit einer Längsachse und einer radialen Dimension derart, dass die Seismikeinrichtung in das Bohrloch passt und in dessen Längsrichtung verschiebbar ist. Im eingesetzten Zustand verläuft die Längsachse der Seismikeinrichtung in Längsrichtung des Bohrlochs. Die seismischen Quellen sind bevorzugt entlang der Längsachse seriell nebeneinander angeordnet, wobei die Wirkrichtung der Quellen vorzugsweise von der Längsachse abweicht und z. B. senkrecht zur Längsachse in radiale Richtung weist.

Gemäß einer vorteilhaften Ausführungsform der Erfindung werden die mindestens zwei seismischen Quellen jeweils mit einer mechanischen Vorspannung relativ zur Wand des Bohrlochs fixiert. Besonders bevorzugt ist jede seismische Quelle mit einer Anpressvorrichtung ausgestattet. Vorteilhafterweise kann die Vorspannung somit für jede seismische Quelle spezifisch eingestellt werden, z. B. um Variationen im Bohrlochdurchmesser oder Unebenheiten in der Bohrlochwand auszugleichen. Die Anpressvorrichtung ist vorzugsweise mit mindestens einem in radialer Richtung verschiebbaren Fixierstempel ausgestattet, mit dem die seismische Quelle im Bohrloch fixiert wird. Vorteilhafterweise kann der Fixierstempel zusätzlich zur Übertragung der seismischen Wellen über die Bohrlochwand in die geologische Formation verwendet werden.

Das Erkundungsverfahren zeichnet sich gemäß der Erfindung durch eine Einstellung der Abstrahlcharakteristik der Quelleneinrichtung aus. Hierzu sind die mindestens zwei seismischen Quellen unabhängig voneinander einstellbar, d. h. die Position und Ausrichtung (Wirkrichtung) jeder der seismischen Quellen im Bohrloch ist spezifisch justierbar. Vorzugsweise sind die mindestens zwei seismischen Quellen unabhängig voneinander steuerbar oder regelbar, d. h. Schwingungseigenschaften (Frequenz, Phase und/oder Amplitude) der mit den seismischen Quellen erzeugten seismischen Schwingungen sind spezifisch wählbar oder in Regelkreisen, z. B. in Abhängigkeit von Signalen von Bewegungssensoren in der Seismikeinrichtung einstellbar. Damit ergeben sich weitere Freiheitsgrade zur Einstellung der Abstrahlcharakteristik.

Gemäß einer ersten Variante umfasst die Einstellung eine Positionierung der seismischen Quellen in einer vorbestimmten Tiefe im Bohrloch und/oder mit einem vorbestimmten gegenseitigen Abstand entlang der Längsachse der Seismikeinrichtung. Erfindungsgemäß weisen die seismischen Quellen verstellbare Abstände auf. Vorteilhafterweise können somit in Längsrichtung des Bohrlochs, insbesondere in verschiedenen Tiefen seismische Schwingungen erzeugt und verschiedene Laufwege zu bestimmten Zielbereichen in der geologischen Formation vorgegeben werden. Zusätzlich umfasst die Einstellung die Ausrichtung jeder seismischen Quelle im Bohrloch, wobei die radiale Wirkrichtung vorzugsweise durch eine Drehung der seismischen Quelle um die Längsachse in azimuthaler Richtung eingestellt wird.

Der Einstellungsschritt kann vor der Bereitstellung der Seismikeinrichtung (insbesondere Positionierung der Quelleneinrichtung) im Bohrloch, z. B. bei der Montage der Seismikeinrichtung mit den seismischen Quellen vorgesehen sein. Gemäß einer besonders bevorzugten Ausführungsform der Erfindung ist der Einstellungsschritt jedoch in einem Zustand vorgesehen, in dem sich die Seismikeinrichtung im Bohrloch befindet. Die Seismikeinrichtung ist in diesem Fall mit Stelleinrichtungen, z. B. Stellmotoren ausgestattet, mit denen die seismischen Quellen entlang der Längsachse der Seismikeinrichtung verschiebbar und/oder um die Längsachse der Seismikeinrichtung relativ zueinander verdrehbar sind.

Gemäß einer besonders bevorzugten Ausführungsform der Erfindung erfolgt die Einstellung der Abstrahlcharakteristik während der Erzeugung der seismischen Wellen. Gemäß einer ersten Variante werden die seismischen Quellen so angesteuert, dass sich die seismischen Wellen mit mindestens einer räumlichen Vorzugsrichtung überlagern. Gemäß der Erfindung werden die mindestens zwei seismischen Quellen so angesteuert, dass die seismischen Wellen mit Vibrationssweeps erzeugt werden. Die Vibrationssweeps weisen dabei verschiedene Phasen und/oder Amplituden auf, während sie gleiche Frequenzgänge besitzen.

Des Weiteren ist es möglich, die Schwingungsanregung der einzelnen Quellen phasenversetzt vorzunehmen, so dass verschiedenen Wellentypen mit spezifischen Abstrahlcharakteristiken angeregt werden. Dies wird weiterhin durch die Möglichkeit der variablen Ausrichtung der Quellen in unterschiedliche Raumrichtungen unterstützt. Ein wichtiges Merkmal der Erfindung besteht somit darin, dass im Bohrloch seismische Wellen mit einer einstellbaren variablen Abstrahlcharakteristik erzeugt werden. Dies geschieht vorzugsweise mit Vibrationsquellen, die Schwingungen in einem breiten Frequenzband, z. B. von 0,1 kHz bis 20 kHz anregen.

Vorteilhafterweise ergibt eine abgestimmte Ansteuerung (Betätigung) der seismischen Quellen, dass sich durch Interferenzen räumliche Vorzugsrichtungen der Abstrahlung der seismischen Erkundungswellen bilden. Die Abstrahlcharakteristik kann so eingestellt werden, dass seismische Wellen, die einen vorbestimmten Untersuchungsbereich durchlaufen, mit der Registriereinrichtung erfasst werden. Das erkundende Wellenfeld kann auf jede gewünschte Raumrichtung fokussiert werden. Die Abstrahlcharakteristik kann insbesondere so eingestellt werden, dass eine vorausschauende seismische Erkundung in Richtung des Bohrlochpfads erfolgt.

Vorteilhafterweise bestehen verschiedene Möglichkeiten, den Ort der Registrierung der seismischen Wellen auszuwählen. Gemäß einer ersten, bevorzugten Variante ist die Registriereinrichtung mit der Quelleneinrichtung im Bohrloch angeordnet. Die Registriereinrichtung hat in diesem Fall eine Größe und Form derart, dass sie in dem Bohrloch positionierbar und verschiebbar ist. Die aus dem Umfeld des Bohrlochs reflektierten seismischen Wellen werden vorzugsweise durch eine in die Seismikeinrichtung integrierte und mit der Quelleneinrichtung verbundene Registriereinrichtung registriert. Sie bilden eine serielle Anordnung, deren Größe und Form an die innere Form des Bohrlochs angepasst ist. Vorteilhafterweise können die Quelleneinrichtung und die Registriereinrichtung mit einer gegenseitigen Schwingungsentkopplung oder -unterdrückung verbunden werden, so dass die Registrierung durch den Betrieb der Quellen nicht gestört wird. Die vom umgebenden Medium zurückgeworfenen Wellen können in unmittelbarer Umgebung der Quellen im Bohrloch detektiert werden.

Die Integration von seismischen Quellen und der Registriereinrichtung in einem gemeinsamen Bohrloch-Messgerät ermöglicht eine Auflösung im dm-Bereich. Bei Anordnung der Seismikeinrichtung in Bohrkopfnähe kann diese Auflösung auch in großer Teufe erhalten werden. Dies ergibt sich unmittelbar aus den kürzeren Laufwegen der genutzten seismischen Wellen und insbesondere der Möglichkeit der Anregung und Registrierung breitbandiger Signale mit Frequenzen bis zu einigen 10 Kilohertz.

Gemäß einer zweiten Variante kann die Registriereinrichtung in mindestens einem weiteren Bohrloch angeordnet sein, das mit einem Abstand, z. B. 10 m bis 1 km von dem Bohrloch, in dem die Quelleneinrichtung betrieben wird, in der geologischen Formation angeordnet ist. Gemäß einer dritten Variante kann die Registriereinrichtung an einer Oberfläche der geologischen Formation angeordnet sein.

Die Registriereinrichtung enthält mindestens ein Registriermodul, das mit einem Schwingungssensor, wie z. B. einem Geophon oder einem Hydrophon ausgestattet ist. Der Schwingungssensor ist vorzugsweise ein Dreikomponentengeophon piezoelektrischer Dreikomponentenaufnehmer, die eine räumlich aufgelöste Messung der Schwingungsrichtungen der seismischen Wellen und damit eine richtungsabhängige Auswertung der aufgezeichneten seismischen Wellen ermöglichen.

Wenn gemäß einer bevorzugten Ausführungsform der Erfindung die Registrierung der seismischen Wellen mit mehreren Registriermodulen der Registriereinrichtung erfolgt, können sich vorteilhafterweise zusätzliche Informationen für die Auswertung der registrierten Schwingungen ergeben. Die Registriermodule sind vorzugsweise im Bohrloch voneinander beabstandet und besonders bevorzugt zur Erzielung einer weiten Detektionsbasis an entgegengesetzten Enden der Seismikeinrichtung angeordnet. Alternativ oder zusätzlich kann, ggf. zur Kombination der o. g. Varianten mindestens eines der Registriermodule in mindestens einem weiteren Bohrloch oder an der Oberfläche der geologischen Formation angeordnet sein.

Erfindungsgemäß können die Erzeugung und die Registrierung der seismischen Wellen wiederholt werden, wobei mit jeder Wiederholung eine veränderte Abstrahlcharakteristik der Quelleneinrichtung eingestellt werden kann. Vorteilhafterweise können somit verschiedene Untersuchungsbereiche mit hoher Ortsauflösung und/oder unter verschiedenen Bedingungen, z. B. mit dem zunehmenden Fortschritt der Bohrung abgebildet werden.

Aus Signalen der Registriereinrichtung werden Informationen, insbesondere Informationen über geometrische Eigenschaften (Bildinformationen) und/oder die Zusammensetzung der geologische Formation ermittelt. Vorzugsweise ist beim erfindungsgemäßen Verfahren eine Auswertung der registrierten seismischen Wellen mit einer Strukturerkundung der Umgebung des Bohrlochs vorgesehen. Die Strukturerkundung kann vorteilhafterweise auf mindestens einen Untersuchungsbereich beschränkt werden, der von der Abstrahlcharakteristik der Quelleneinrichtung abgedeckt sind.

Die seismischen Quellen der Seismikeinrichtung sind vorzugsweise als Module jeweils mit mindestens einem Aktuator aufgebaut, der den aktiven Schwingungsantrieb (Betätigungsglied) bildet. Der Aktuator ist vorzugsweise eine Vibrationsquelle. Diese hat den Vorteil, dass Schwingungseigenschaften der seismischen Wellen gezielt eingestellt werden können. Besonders bevorzugt ist der Aktuator schwimmend in der Seismikeinrichtung gelagert. Der Aktuator kann z. B. mit der Anpressvorrichtung fest verbunden sein. In diesem Fall ist die Anpressvorrichtung vorzugsweise schwimmend der Seismikeinrichtung angeordnet. Durch die schwimmende Lagerung kann der Aktuator vorteilhafterweise unabhängig von der Anordnung der Seismikeinrichtung zentrisch im Bohrloch positioniert werden. Des Weiteren wird eine Schwingungsentkopplung des Aktuators von der Seismikeinrichtung erreicht.

Beim integrierten Modulaufbau der Seismikeinrichtung mit der Quelleneinrichtung und der Registriereinrichtung sind diese vorzugsweise durch eine Halteeinrichtung verbunden. Die Halteeinrichtung wird durch eine Reihe von Haltekäfigen gebildet, die jeweils zur Aufnahme einer seismischen Quelle oder eines Registriermoduls eingerichtet sind. Besonders bevorzugt sind die Haltekäfige relativ zueinander drehbar angeordnet, wodurch die Einstellung der seismischen Quellen und des mindestens einen Registriermoduls vereinfacht wird.

Ein weiterer Vorteil der erfindungsgemäßen Seismikeinrichtung besteht darin, dass eine Anwendung unter verschiedensten Betriebsbedingungen möglich ist. Die Seismikeinrichtung kann in einem allein für die seismische Erkundung vorgetriebenen, leeren Bohrloch verwendet werden. In diesem Fall steht der gesamte lichte Durchmesser des Bohrlochs für die Seismikeinrichtung zur Verfügung. Alternativ kann die Seismikeinrichtung in einem Bohrloch verwendet werden, welches zur Förderung und/oder Injektion von Substanzen aus der und/oder in die geologische Formation vorgetrieben wurde. In diesem Fall kann ebenfalls für bestimmte Messzeiten der lichte Durchmesser des Bohrlochs für die Seismikeinrichtung bereitgestellt werden. Es ist jedoch auch möglich, die Seismikeinrichtung zu betreiben, während im Bohrloch ein Bohrlochgestänge angeordnet ist. Für diesen Fall ist die Quelleneinrichtung ggf. mit der Registriereinrichtung zur Verbindung mit dem Bohrlochgestänge konfiguriert. Bei der Integration der Seismikeinrichtung in das Bohrgestänge können vorteilhafterweise während der Bohrung wichtige Informationen zur Überwachung des Bohrprozesses gewonnen werden. Beispielsweise kann die Halteeinrichtung der Seismikeinrichtung mit einer Aufnahme für das Bohrlochgestänge ausgestattet sein, ohne das die Funktion der Quelleneinrichtung und ggf. der Registriereinrichtung beeinträchtigt wird. Bei allen Varianten ist die Ausrichtung des Bohrlochs unkritisch. So kann die Erfindung in einem horizontalen oder einem vertikalen Bohrloch oder einem Bohrloch mit einer Neigung zwischen 0° und 90° realisiert werden.

Weitere Einzelheiten und Vorteile der Erfindung werden im Folgenden unter Bezug auf die beigefügten Zeichnungen beschrieben. Es zeigen:
- Figur 1:: eine erste Ausführungsform der erfindungsgemäßen Seismikeinrichtung in Seiten-, Perspektiv- und Draufsicht;
- Figur 2:: eine weitere Ausführungsform der erfindungsgemäßen Seismikeinrichtung;
- Figur 3:: eine weitere Ausführungsform der erfindungsgemäßen Seismikeinrichtung in einem Bohrloch; und
- Figur 4:: eine weitere Ausführungsform der erfindungsgemäßen Seismikeinrichtung in einem Bohrloch mit einem Bohrgestänge.

Die erfindungsgemäße Seismikeinrichtung wird im Folgenden unter beispielhaftem Bezug auf Ausführungsformen beschrieben, bei denen zwei oder vier seismische Quellen und ein oder zwei Registriermodule vorgesehen sind. Die Erfindung ist nicht auf diese Varianten beschränkt, sondern mit drei oder einer größeren Anzahl von seismischen Quellen und/oder Registriermodulen realisierbar.

Einzelheiten der Bohrlochseismik, insbesondere das Bohren des Bohrlochs, die Erzeugung einer seismischen Welle mit einem magnetostriktiven oder piezoelektrischen Aktuator und die Auswertung von seismischen Wellen, die in der geologischen Formation reflektiert, gestreut und/oder gebrochen wurden, werden nicht erläutert, soweit sie aus dem Stand der Technik als solche bekannt und bei der Realisierung der Erfindung anwendbar sind.

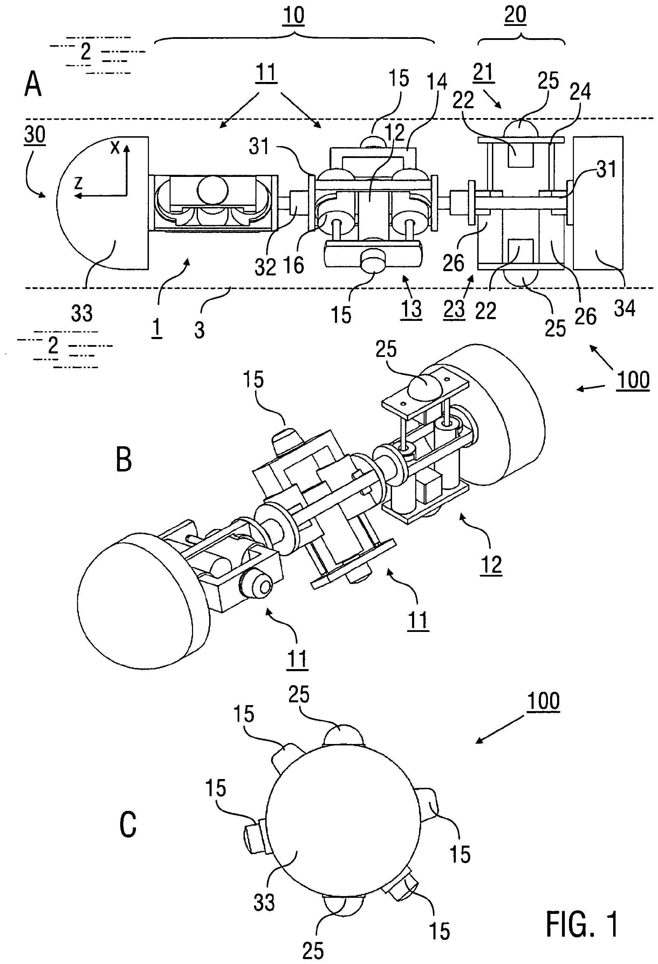

Eine erste Ausführungsform der erfindungsgemäßen Seismikeinrichtung 100 ist in Figur 1 in Seitenansicht (Figur 1A), Perspektivansicht (Figur 1B) und axialer Draufsicht (Figur 1C) illustriert. Die Seismikeinrichtung 100 umfasst eine Quelleneinrichtung 10 mit zwei seismischen Quellen 11 und eine Registriereinrichtung 20 mit einem Registriermodul 21. Die Quelleneinrichtung 10 und die Registriereinrichtung 20 sind mittels einer Halteeinrichtung 30 miteinander verbunden, die aus Haltekäfigen 31 und Achselementen 32 zusammengesetzt ist. Die Quellen- und Registriereinrichtungen 10, 20 sind linear nebeneinander angeordnet. Somit hat die Seismikeinrichtung 100 eine längliche Form (Stab-, Säulen- oder Zylinderform), die an die Gestalt des Bohrlochs angepasst ist. Die Längsachse der Seismikeinrichtung 100 verläuft in Längsrichtung (z-Richtung) des Bohrlochs.

Das Bohrloch 1 ist schematisch in Figur 1A illustriert. Es erstreckt sich gerade oder mit einer Krümmung in einer geologischen Formation 2, die einen unterirdischen oder unterseeischen Bereich der Erdkruste umfasst. In Abhängigkeit von der Art des Bohrlochs 1 kann die Wand 3 des Bohrlochs durch die geologische Formation 2, zum Beispiel Felsgestein, oder eine Wandverschalung gebildet werden. Der Innendurchmesser des Bohrlochs 1 kann zum Beispiel 10 cm bis 50 cm betragen.

Die mindestens zwei seismischen Quellen 11 sind entlang der Längsachse der Seismikeinrichtung 100 nebeneinander und somit in Längsrichtung des Bohrlochs 1 relativ zueinander versetzt angeordnet. Die seismischen Quellen 11 haben beim dargestellten Ausführungsbeispiel den gleichen Aufbau. Alternativ können sich die seismischen Quellen 11 in Bezug auf Einzelheiten, wie zum Beispiel den Typ der Schwingungserzeugung oder die Kopplung mit der Halteeinrichtung 30 unterscheiden.

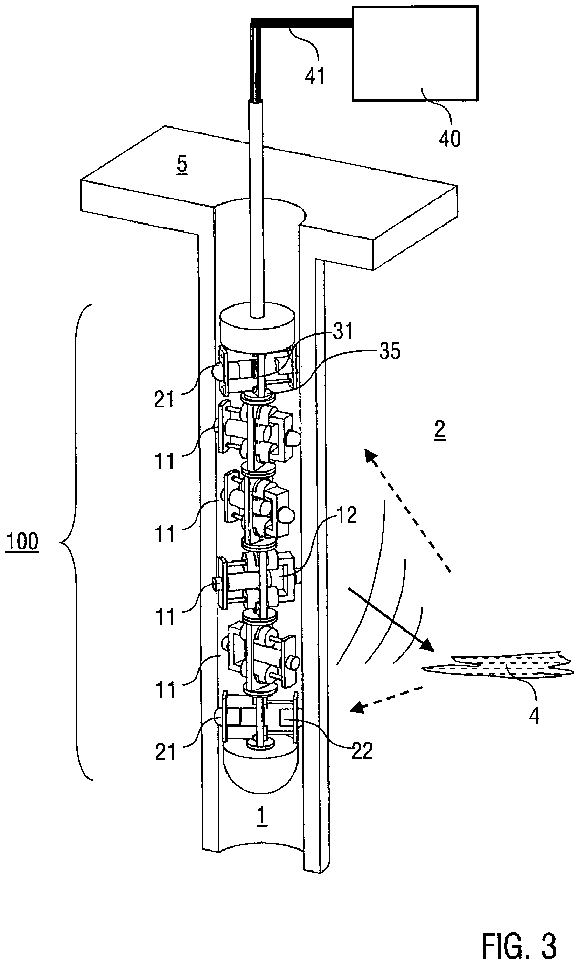

Jede seismische Quelle 11 umfasst einen Aktuator 12, der mit einer Anpressvorrichtung 13 verbunden ist. Der Aktuator 12 ist beispielsweise ein magnetostriktiver oder ein piezoelektrischer Aktuator, wie er in seismischen Messverfahren verwendet wird. Der Aktuator 12 kann gemäß einem abgewandelten Ausführungsbeispiel mit einem Bewegungssensor (nicht gezeigt) ausgestattet sein. Der Bewegungssensor ist vorzugsweise unmittelbar im Bereich der Schwingungseinleitung in die Fixierstempel an einem Kopfteil des Aktuators positioniert. Mit dem Signal des Bewegungssensors wird die real eingekoppelte Bewegung am Fixierstempel registriert. Dieses Signal kann zur Regelung des Aktuators in Bezug auf eine vorbestimmte Führungsgröße und/oder bei der Auswertung der mit der Registriereinrichtung 20 registrierten Signale verwendet werden. Der Aktuator 12 (und ggf. der Bewegungssensor) ist über elektrische Leitungsverbindungen (nicht dargestellt) mit einer Steuereinrichtung (siehe Figur 3) verbunden.

Die Anpressvorrichtung 13, die in radialer Richtung ausdehnbar ist, umfasst einen sich in radialer Richtung erstreckenden, einstellbaren Rahmen 14, an dessen nach außen weisenden Seiten jeweils ein Fixierstempel 15 vorgesehen ist. Der Rahmen 14 enthält ein oder (wie dargestellt) zwei Spannelemente 16, mit denen die Fixierstempel 15 radial nach außen gedrückt werden können. Die Spannelemente 16 umfassen zum Beispiel Hydraulikzylinder oder Spiralfedern. Die Anpressvorrichtung 13 ist im Haltekäfig 31 der Halteeinrichtung 30 schwimmend gelagert. Abweichend von der illustrierten Struktur kann die Anpressvorrichtung 13 mit weiteren Fixierstempeln ausgestattet sein, so dass zum Beispiel drei, vier oder mehr Fixierstempel vorgesehen sind.

Gemäß dem illustrierten Ausführungsbeispiel ist der Aktuator 12 mit einem der Fixierstempel 15 verbunden, um über diesen in der umgebenden geologischen Formation Schwingungen anzuregen und seismische Wellen zu erzeugen. Alternativ kann jede seismische Quelle 11 mehrere Aktuatoren 12, zum Beispiel zwei oder mehr Aktuatoren aufweisen, die jeweils mit einem der Fixierstempel 15 verbunden sind.

Das Registriermodul 21 der Registriereinrichtung 20 hat einen ähnlichen Aufbau wie die seismische Quelle 11. Das Registriermodul 21 enthält einen oder (wie dargestellt) zwei Sensoren 22, die mit einer Anpressvorrichtung 23 verbunden sind. Die Sensoren 22 umfassen zum Beispiel Dreikomponentengeophone, zum Beispiel vom Typ GS14L3, oder piezoelektrische Dreikomponentenaufnehmer, zum Beispiel vom Typ KS943B.100. Die Sensoren 22 sind über elektrische Leitungen (nicht dargestellt) mit der Steuereinrichtung (siehe Figur 3) verbunden. Die Anpressvorrichtung 23 umfasst einen sich in radialer Richtung erstreckenden Rahmen 24 mit Fixierstempeln 25 und Spannelementen 26, zum Beispiel hydraulischen Zylindern oder Spiralfedern. Die Anpressvorrichtung 23 ist im Haltekäfig 31 der Halteeinrichtung 30 schwimmend gelagert, um eine Schwingungsentkopplung von den übrigen Teilen der Seismikeinrichtung 100 zu erzielen.

Die Halteeinrichtung 30 wird durch die lineare Anordnung der Haltekäfige 31 gebildet, die über die Achselemente 32 miteinander verbunden sind. An einem ersten (vorderen) Ende der Halteeinrichtung 30 ist ein Kopfteil 33 vorgesehen, das eine sich in axialer Richtung verjüngende Form, zum Beispiel Halbkugel- oder Kegelform aufweist. Am zweiten (rückseitigen) Ende der Halteeinrichtung 30 ist ein Kopplungsteil 34 vorgesehen, das einen mechanischen Abschluss der Seismikeinrichtung 100 bildet. Zugleich kann das Kopplungsteil 34 eine Schnittstelle zur Verbindung der elektrischen Leitungen der Aktuatoren und Sensoren mit der Steuereinrichtung bilden.

Die Haltekäfige 31, die sich in axialer Richtung der Seismikeinrichtung 100 erstrecken, bilden jeweils eine Aufnahme für eine Anpressvorrichtung 13, 23 der seismischen Quellen 11 oder des Registriermoduls 21. Die Achselemente 32 können starre Verbindungsstäbe zwischen benachbarten Haltekäfigen 31 umfassen. In diesem Fall ist die Struktur der Seismikeinrichtung 100 und insbesondere die relative Ausrichtung der seismischen Quellen 11 und der Registriermodule 21 unveränderlich. Bevorzugt ist eine Variante der Erfindung, bei der die Haltekäfige 31 relativ zueinander um die Längsachse der Seismikeinrichtung 100 drehbar sind. Hierzu können die Achselemente 32 mit Drehlagern ausgestattet sein. Vorteilhafterweise kann damit die Ausrichtung der seismischen Quellen 11 und des Registriermoduls 21, insbesondere in Abhängigkeit von den konkreten Anwendungsbedingungen, geändert werden.

Es kann vorgesehen sein, die Ausrichtung der seismischen Quellen 11 und des Registriermoduls 21 vor der Einführung der Seismikeinrichtung 100 in das Bohrloch 1 einzustellen. In diesem Fall ist eine spätere Änderung der Orientierung nur nach einer wiederholten Entnahme der Seismikeinrichtung 100 aus dem Bohrloch 1 möglich. Die Flexibilität bei der Einstellung der Seismikeinrichtung 100 kann noch verbessert werden, wenn der Haltekäfig 31 und/oder das Achselement 32 von mindestens einem Teil der Quellen- und Registriereinrichtungen 20 mit einer Stelleinrichtung, z. B. einem Stellmotor (nicht dargestellt) ausgestattet ist. Die größte Variabilität ergibt sich, wenn für jede Komponente der Quellen- und Registriereinrichtungen 10, 20 ein Stellmotor vorgesehen ist, um die seismischen Quellen 11 und/oder das Registriermodul 21 kontinuierlich oder in vorbestimmten Schritten um die Längsachse der Seismikeinrichtung 100 zu drehen.

Die Figuren 1A bis 1C illustrieren beispielhaft die verschiedenen Ausrichtungen der seismischen Quellen 11 und des Registriermoduls 21 derart, dass die Fixierstempel 15, 25 radial in verschiedene Richtungen weisen (siehe insbesondere Figur 1C).

Vorteilhafterweise wird ein weiterer Freiheitsgrad bei der Einstellung der Seismikeinrichtung 100 erhalten, wenn die gegenseitigen Abstände der seismischen Quellen 11 und/oder des mindestens einen Registriermoduls 21 in Längsrichtung der Seismikeinrichtung 100 einstellbar sind. Es können Achselemente 32 mit verschiedenen Längen vorgesehen sein. Alternativ kann die Seismikeinrichtung 100 mit einer Vielzahl von Kombinationen aus Haltekäfigen 31 und Achselementen 32 ausgestattet sein, von denen nicht alle Haltekäfige 31 mit seismischen Quellen 11 oder Registriermodulen 21 besetzt sind. In beiden Fällen ist der Aufbau der Seismikeinrichtung 100 besonders einfach, die Einstellbarkeit während des Betriebs jedoch beschränkt.

Gemäß einer vorteilhaften Variante der Erfindung können daher zwischen den Haltekäfigen 31 Achselemente mit veränderlicher Länge vorgesehen sein. Die Achselemente können eine Teleskopstruktur aus mindestens zwei ineinander gesteckten und relativ zueinander verschiebbaren Rohren aufweisen. Auch in diesem Fall können Stelleinrichtungen vorgesehen sein, um die Länge der Achselemente 32 einzustellen. Somit kann erfindungsgemäß der Abstand zwischen seismischen Quellen 11 und/oder Registriermodulen 21 eingestellt werden, während sich die Seismikeinrichtung 100 im Bohrloch 1 befindet.

Die Seismikeinrichtung 100 wird beispielsweise mit den folgenden Dimensionen realisiert. Die Gesamtlänge der Seismikeinrichtung 100 in Längsrichtung kann beispielsweise im Bereich von 50 cm bis 5 m gewählt sein und z. B. 2 m betragen. Die Querschnittsdimension in radialer Richtung, zum Beispiel der Durchmesser, kann im Bereich von 10 cm bis 50 cm gewählt sein und z. B. 20 cm betragen. Die Querschnittsdimension in radialer Richtung entspricht im Wesentlichen der Größe der Rahmen 14, 24 in radialer Richtung. In der Halteeinrichtung 30 sind mindestens zwei seismische Quellen 11 angeordnet. Bei Registrierung der seismischen Wellen im Bohrloch 1 ist des Weiteren das mindestens eine Registriermodul 21 in der Halteeinrichtung 30 angeordnet.

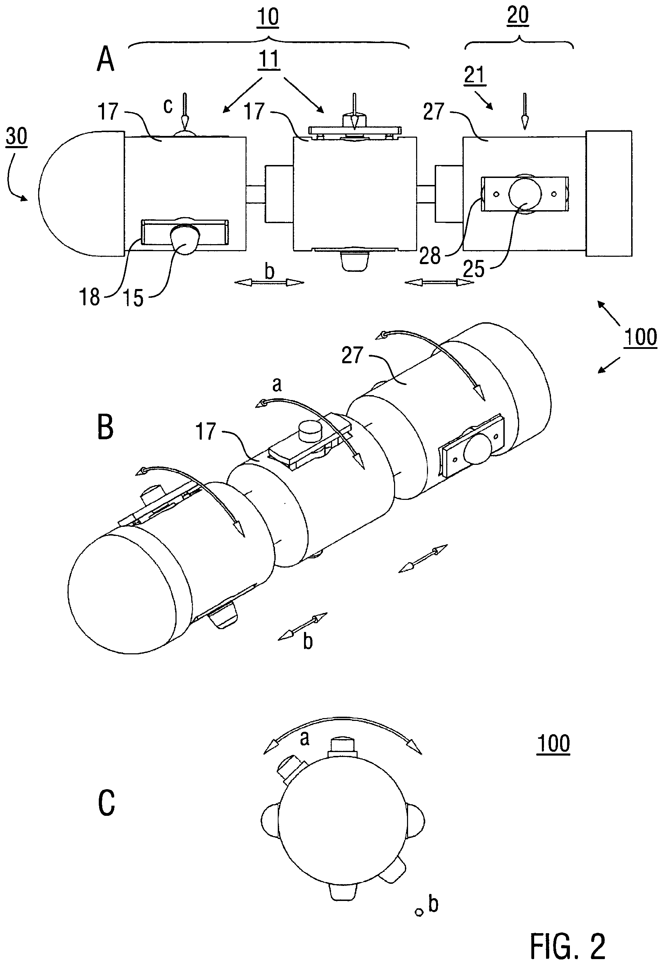

In Figur 2 ist eine abgewandelte Ausführungsform der erfindungsgemäßen Seismikeinrichtung 100 gezeigt, bei der die Quellen-, Registrier- und Halteeinrichtungen 10, 20 und 30 wie in Figur 1 gezeigt aufgebaut sind. Zusätzlich sind die seismischen Quellen 11 und das Registriermodul 21 mit Gehäusen ausgestattet. Die Gehäuse bilden einen Schutz der seismischen Quellen 11 und des Registriermoduls 21 im Bohrloch, insbesondere gegen unerwünschte mechanische Einflüsse oder Verunreinigungen. Die seismische Quelle 11 ist mit einem Quellen-Gehäuse 17 ausgestattet, in dessen Gehäusewand Öffnungen 18 vorgesehen sind, durch welche die Fixierstempel 15 radial nach außen ragen. Das Quellen-Gehäuse 17 ist mit dem Haltekäfig 31 (siehe Figur 1) fest verbunden. Wenn die Haltekäfige 31 der Halteeinrichtung 30 drehbar sind, können die Quellen-Gehäuse 17 ebenfalls um die Längsachse der Seismikeinrichtung 100 gedreht werden. Das Registriermodul 21 ist mit einem Registriermodul-Gehäuse 27 ausgestattet, das ebenfalls Öffnungen 28 aufweist, durch welche die Fixierstempel 25 radial nach außen ragen. Die Quellen- und Registriermodul-Gehäuse 17, 27 bestehen zum Beispiel aus Edelstahl oder einem Kunststoff.

Figur 2 illustriert des weiteren die Freiheitsgrade der Einstellung der erfindungsgemäßen Seismikeinrichtung 100. Die Pfeile a illustrieren die Einstellung der seismischen Quellen 11 und/oder der Registriermodule 21 in azimutaler Richtung, d. h. durch eine Drehung um die Längsachse der Seismikeinrichtung, während die Pfeile b die Einstellung der seismischen Quellen 11 und/oder der Registriermodule 21 in Längsrichtung veranschaulichen. Zusätzlich ist mit den Pfeilen c die Verstellmöglichkeit der Fixierstempel 15 in radialer Richtung gezeigt.

Eine weitere Ausführungsform der erfindungsgemäßen Seismikeinrichtung 100 ist schematisch in Figur 3 mit einem Betriebszustand in einem vertikal ausgerichteten Bohrloch 1 gezeigt. Die Seismikeinrichtung ist im Wesentlichen aufgebaut, wie es oben unter Bezug auf die Figuren 1 und 2 beschrieben wurde. Bei dem dargestellten Ausführungsbeispiel sind vier seismische Quellen 11 vorgesehen, die entlang der Längsachse der Seismikeinrichtung 100 übereinander angeordnet sind. An den Enden der Seismikeinrichtung 100 sind die Registriermodule 21 vorgesehen. Die seismischen Quellen 11 und die Registriermodule 21 sind schwimmend in den Haltekäfigen 31 der Halteeinrichtung gelagert. Abweichend von den oben beschriebenen Ausführungsformen sind zwischen den Haltekäfigen 31 keine Achselemente vorgesehen. Die Seitenscheiben 35 der Haltekäfige 31 sind über Drehlager unmittelbar miteinander verbunden.

Figur 3 illustriert schematisch eine Steuereinrichtung 40, die an der Oberfläche 5 der geologischen Formation 2 vorgesehen und über eine Leitungsverbindung 41 mit den Aktuatoren 12 und den Sensoren 22 der Quellen- und Registriereinrichtungen 10, 20 verbunden ist. Die Steuereinrichtung 40 enthält eine Stromversorgungseinrichtung und eine Datenverarbeitungseinrichtung. Die Datenverarbeitungseinrichtung ist zur Steuerung der Aktuatoren 12 und zur Verarbeitung der Signale der Sensoren 22 eingerichtet.

Zur Durchführung der erfindungsgemäßen seismischen Erkundung der Umgebung des Bohrlochs 1 sind die folgenden Schritte vorgesehen. Zunächst wird die Seismikeinrichtung 100 im Bohrloch 1 positioniert. Es erfolgt eine Einstellung der Abstrahlcharakteristik der Quelleneinrichtung 10. Hierzu werden die Abstände der seismischen Quellen 11 in Längsrichtung und die Ausrichtung der seismischen Quellen 11 in azimutaler Richtung eingestellt. Die Einstellung erfolgt derart, dass seismische Wellen mit einer vorbestimmen Abstrahlcharakteristik, zum Beispiel mit einer kegel- oder keulenförmigen Abstrahlcharakteristik erzeugt werden. Die seismischen Wellen werden beispielsweise auf einen Untersuchungsbereich 4 in der geologischen Formation 2 gerichtet. Zusätzlich werden zur Einstellung der Abstrahlcharakteristik die Aktuatoren 12 der seismischen Quellen 11 mit der Steuereinrichtung 40 so betätigt, dass die seismischen Wellen Vibrationssweeps aufweisen. Die Vibrationssweeps zeichnen sich durch gleiche Frequenzgänge, zum Beispiel im Bereich von 0,1 kHz bis 20 kHz aus, variieren jedoch hinsichtlich der Phase und/oder der Amplitude der von den Aktuatoren 12 erzeugten Schwingungen. Die Vibrationssweeps können gebildet werden, wie es an sich aus der Explorationsseismik, wie z. B. bei der Erdöl-Explorationsseismik bekannt ist, und weisen z. B. eine lineare Frequenzänderung (insbesondere "up-sweep") auf.

Mit den Sensoren 22 der Registriermodule 21 werden charakteristische Schwingungssignale aufgenommen, die durch die in der geologischen Formation 2, insbesondere an dem Untersuchungsbereich 4 reflektierten und auf den Laufwegen gegebenenfalls gebrochenen oder gestreuten seismischen Wellen bestimmt werden. Schließlich werden die mit den Sensoren 22 registrierten Signale mit der Steuereinrichtung 40 verarbeitet, zum Beispiel um ein Bild des Zielbereiches 4 zu erzeugen. Die Verarbeitung der Signale der Sensoren 22 kann an sich aus der Seismik bekannte Verfahren umfassen und insbesondere eine Verarbeitung von Stapelsignalen aus mehreren Messungen (Rauschminderung), eine Dekonvolution (Erzeugung der Impulsantwort), eine Frequenzfilterung, eine Richtungsfilterung, eine Migrationsanalyse und/oder eine tomographische Bildrekonstruktion einschließen.

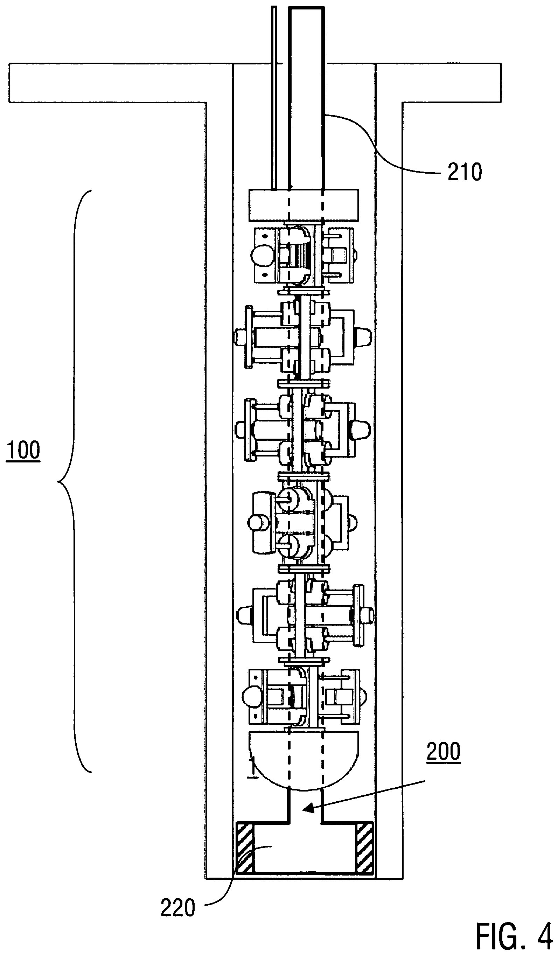

In Figur 3 wurde für die seismische Untersuchung das Werkzeug zum Bohren des Bohrlochs 1, insbesondere das Bohrgestänge aus dem Bohrloch 1 entfernt, um Platz für die Seismikeinrichtung 100 zu schaffen. Vorteilhafterweise ist es nicht zwingend erforderlich, ein Bohrgestänge aus einem Bohrloch 1 zu entfernen. Die Seismikeinrichtung 100 kann erfindungsgemäß angepasst sein, um gleichzeitig mit dem Bohrgestänge 200 im Bohrloch 1 angeordnet zu sein, wie schematisch in Figur 4 illustriert ist. Beispielsweise kann die Seismikeinrichtung 100 Bestandteil der üblichen MWD-Geräte ("measurement while drilling") oder angepasst in den oder am Antriebsstrang 210 integriert sein. Vorteilhaft ist die Anordnung der Seismikeinrichtung möglichst nahe am Bohrmeißel 220.

Anwendungen der Erfindung bestehen bei allen bekannten bohrloch-geophysikalischen Messmethoden, so insbesondere beim Ausbau der kostengünstigen und sicheren Nutzung des geologischen Untergrundes in unterschiedlichsten Tiefenbereichen. Das Anwendungsspektrum reicht z. B. von vertikalen Flach- und Tiefbohrungen bis zu Horizontalbohrungen, insbesondere mit Durchmessern z. B. von 31 cm. Dabei liegt der Fokus auf vorausschauende Erkundungen zur Erfassung des jeweiligen Untersuchungsbereiches wie Aquifere oder Störungen im Hartgestein.

Bei Anwendungen im Tiefbau, insbesondere Tunnelbau, und/oder Bergbau ermöglicht die Erfindung als Ergänzung zu punktuellen Erkundungen bei Kernbohrungen eine geotechnische Bewertung von Standsicherheit und Stabilität des Untergrundes in Hinblick auf wassergefüllte oder trockene Störzonen. Während es im Tunnelbau üblich ist, für die Vorauserkundung Horizontalbohrungen mit Kerngewinn durchzuführen, kann mit dem erfindungsgemäßen Verfahren die zu erreichende Erkundungstiefe über die eigentlich erbohrte Strecke deutlich erhöht werden. So kann die Anzahl und die Länge der erforderlichen Kernbohrungen minimiert werden, da das erfindungsgemäße Verfahren auch Aussagen über das Bohrlochumfeld liefert. Dies ergibt bei Kosten von rd. 1000 EUR für einen Meter Kernbohrung erhebliche Kosteneinsparungen. Neben Kosteneinsparungen ist der zusätzliche Erkenntnisgewinn von Strukturinformationen in Vortriebsrichtung von Vorteil, da diese die Sicherheit der untertägigen Arbeiten erhöhen und die Stillstandszeiten der Tunnelbohrmaschine verringern.

In der Geothermie können erfindungsgemäß thermalwasserführende Gesteinsschichten oder geklüftete Störzonen, insbesondere in großen Tiefen (z. B. vier bis fünf Kilometer), nachgewiesen oder geologischen Modelle aus der Vorerkundung der Bohrung überprüft werden. Während thermalwasserführende Zonen mit der herkömmlichen Erkundung von der Oberfläche aus nur unzureichend aufgelöst werden können, ermöglicht das erfindungsgemäße Verfahren eine Minimierung des Fündigkeitsrisikos und des Verlusts von Bohrkosten (rd. 10 Mio. EUR pro Bohrung). Dieses Risiko war bisher das wesentliche Hemmnis für eine breitere Anwendung der Geothermie, z. B. auch zur Stromerzeugung.

Beim Betrieb einer Bohranlage zur Erschließung geothermischer Horizonte kann ein wesentlicher Teil der Spülflüssigkeit in geologischen Formationen verloren gehen, wenn nicht rechzeitig das Erreichen einer kritischen Formation bekannt ist. Die sehr teure Spülflüssigkeit dringt dann mit dem Bohrklein in diese Horizonte ein. Auf diese Weise werden die Erdschichten, bei denen es sich beispielsweise um Malmkalke handelt, verstopft. Diese Verstopfungen müssen durch aufwändige Maßnahmen aufgelöst werden und es entstehen lange Stillstandszeiten der Bohranlage. Insbesondere bei der Integration der erfindungsgemäßen Seismikeinrichtung in den Bohrstrang fallen keine zusätzlichen Kosten an, da keine Stillstandszeiten anfallen und der Bohrprozess entsprechend der zu erwartenden Horizonte gesteuert werden kann.

Eine weitere Anwendung besteht bei der Kohlenwasserstoff-Erschließung, insbesondere der Erkundung und Verifizierung eines Lagerstättenmodells. In der Untergrundspeicherung oder in Reservoirtechnologien können bohrlochgeophysikalische Messprogramme ergänzt, Aquiferspeicher-Eigenschaften bestimmt, Messungen zur Überwachung der Sättigungsverhältnisse durchgeführt, eine Diagnose bei Stör- oder Schadensfällen durchgeführt und/oder de Bohrprozesses überwacht werden. Anwendungen sind auch in der Wasserwirtschaft, insbesondere in der Brunnentechnik gegeben, wobei z. B. tiefe Aquiferen erkundet werden.

Bei Errichtung und Betrieb von Untergrundspeichern (z. B. Erdgas, CO₂) können während des Abteufens der Bohrungen wertvolle zusätzliche Informationen bezüglich der lithologischpetrographischen Profilgliederung und Schichtbewertung ermittelt werden. Daraus ergeben sich zusätzliche Aussagen über Aquiferspeicher-Eigenschaften, die für die Errichtung des Speichersystems von großem Wert sind. Während des Speicherbetriebes können Messungen zur Überwachung des Sättigungsverhältnisses im Speichergestein sowie zur Unterstützung von Diagnosen im Stör- oder Schadensfall durchgeführt werden, um so die Effizienz und Betriebssicherheit der Anlage zu erhöhen.

Bohrlochmessungen in der Lagerstättenerkundung sind insbesondere für die lithologisch-petrographische Profilgliederung und Schichtbewertung sowie zur Vorratsermittlung der Lagerstätte (Lagerstättenbewertung)wichtig, um die Vorerkundung mittels Oberflächenseismik zu ergänzen. Die bohrlochnahe Erkundung kann von wenigen Metern auf über 50 Meter erweitert werden und damit den Aussagewert einer Erkundungsbohrung erhöhen.

Durch die Erweiterung des bohrlochnahen Erkundungsraumes können auch in der Hydrogeologie entsprechende Vorteile für die hydrologische Erkundung des Untergrundes im Bereich der Wasserwirtschaft generiert werden. Ebenso können mit der seismischen Vorauserkundung des Bohrlochtools tiefe Aquifere erkundet werden, wie auch bei nichtfündigen Brunnenbohrungen das Fündigkeitsrisiko bestimmt werden kann.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

Der Gegenstand des Schutzbegehrens ist in den Patentansprüchen angegeben.

## Patentansprüche

1. Verfahren zur seismischen Erkundung einer Umgebung eines Bohrlochs (1) in einer geologischen Formation (2), umfassend die Schritte:
- Bereitstellung einer Quelleneinrichtung (10), die mindestens zwei seismische Quellen (11) umfasst, im Bohrloch (1),
- Einstellung einer vorbestimmten Abstrahlcharakteristik der Quelleneinrichtung (10), wenn sich die mindestens zwei seismischen Quellen (11) im Bohrloch (1) befinden,
- Erzeugung von seismischen Wellen, die sich mit der durch die mindestens zwei seismischen Quellen (11) gebildeten Abstrahlcharakteristik in der geologischen Formation (2) ausbreiten, und
- Registrierung der seismischen Wellen mit einer Registriereinrichtung (20),
wobei
- die Einstellung der Abstrahlcharakteristik der Quelleneinrichtung (10) umfasst:
- eine Einstellung eines Abstandes der mindestens zwei seismischen Quellen (11) in Längsrichtung im Bohrloch (1),
- eine Einstellung einer Ausrichtung der mindestens zwei seismischen Quellen (11) in azimutaler Richtung im Bohrloch (1), und
- eine Ansteuerung der mindestens zwei seismischen Quellen (11) derart, dass die seismischen Wellen mit Vibrationssweeps erzeugt werden, und dass die Vibrationssweeps der seismischen Wellen, die mit den mindestens zwei seismischen Quellen (11) erzeugt werden, die gleichen Frequenzgänge aufweisen und verschiedene Phasen und/oder Amplituden aufweisen.

2. Verfahren gemäß Anspruch 1, bei dem die Bereitstellung der Quelleneinrichtung (10) umfasst:
- eine serielle Anordnung der mindestens zwei seismischen Quellen (11) entlang der Längsachse des Bohrlochs (1), und/oder
- eine Fixierung der mindestens zwei seismischen Quellen (11) jeweils mit einer vorbestimmten Vorspannung relativ zur Wand (3) des Bohrlochs (1).

3. Verfahren gemäß Anspruch 2, bei dem
- die Fixierung der mindestens zwei seismischen Quellen (11) vorgesehen ist, wobei
- die Vorspannung mit Anpresseinrichtungen (13) erzeugt wird, die jeweils an den seismischen Quellen (11) vorgesehen sind.

4. Verfahren gemäß Anspruch 3, bei dem
- die erzeugten seismischen Wellen über Fixierstempel (15) der Anpresseinrichtungen (13) in die geologische Formation (2) übertragen werden.

5. Verfahren gemäß einem der vorhergehenden Ansprüche, bei dem die Einstellung der Abstrahlcharakteristik der Quelleneinrichtung (10) umfasst:
- eine Ansteuerung der mindestens zwei seismischen Quellen (11) derart, dass die seismischen Wellen mit mindestens einer räumlichen Vorzugsrichtung der Abstrahlcharakteristik erzeugt werden.

6. Verfahren gemäß einem der vorhergehenden Ansprüche, bei dem
- die Registrierung der seismischen Wellen im Bohrloch (1), in mindestens einem weiteren Bohrloch und/oder an einer Oberfläche (5) der geologischen Formation (2) erfolgt,
- die Registrierung der seismischen Wellen mit mehreren Registriermodulen (21) der Registriereinrichtung (20) erfolgt, die im Bohrloch (1) voneinander beabstandet angeordnet sind, und/oder
- die Erzeugung und die Registrierung der seismischen Wellen jeweils mit veränderter Abstrahlcharakteristik der Quelleneinrichtung (10) wiederholt werden.

7. Verfahren gemäß einem der vorhergehenden Ansprüche, mit dem Schritt
- Auswertung der registrierten seismischen Wellen mit einer Strukturerkundung der Umgebung des Bohrlochs, wobei die Strukturerkundung auf Untersuchungsbereiche (4) beschränkt ist, die von der Abstrahlcharakteristik der Quelleneinrichtung (10) abgedeckt sind.

8. Seismikeinrichtung (100) zur seismischen Erkundung einer Umgebung eines Bohrlochs in einer geologischen Formation, umfassend:
- eine Quelleneinrichtung (10) mit mindestens zwei seismischen Quellen (11), die eine Abstrahlcharakteristik aufweist und in dem Bohrloch (1) positionierbar ist, wobei die Quelleinrichtung (10) zur Erzeugung von seismischen Wellen, die sich mit der durch die mindestens zwei seismischen Quellen (11) gebildeten Abstrahlcharakteristik in der geologischen Formation (2) ausbreiten, ausgebildet ist,
- eine Steuereinrichtung (40), mit der Aktuatoren (12) der seismischen Quellen (11) betätigbar sind, wobei die Steuereinrichtung (40) an der Oberfläche (5) der geologischen Formation (2) positionierbar ist, und
- eine Registriereinrichtung (20), mit der seismische Wellen in der Umgebung des Bohrlochs (1) registrierbar sind,
wobei
- die mindestens zwei seismischen Quellen (11) voneinander unabhängig betätigbar sind, einen verstellbaren Abstand aufweisen und relativ zueinander verdrehbar sind, und wobei
- die Quelleneinrichtung (10) für eine Einstellung der Abstrahlcharakteristik der Quelleneinrichtung (10) und die Steuereinrichtung (40) für eine Ansteuerung der mindestens zwei seismischen Quellen (11) derart konfiguriert ist, dass die seismischen Wellen mit Vibrationssweeps erzeugt werden und dass die Vibrationssweeps der seismischen Wellen, die mit den mindestens zwei seismischen Quellen (11) erzeugt werden, die gleichen Frequenzgänge aufweisen und verschiedene Phasen und/oder Amplituden aufweisen.

9. Seismikeinrichtung gemäß Anspruch 8, bei der die Registriereinrichtung (20) relativ zu den seismischen Quellen (11)
- einen verstellbaren Abstand aufweist, und/oder
- verdrehbar ist.

10. Seismikeinrichtung gemäß einem der Ansprüche 8 bis 9, bei der
- jede der seismischen Quellen (11) eine Anpresseinrichtung (13) aufweist, die zur Fixierung der seismischen Quelle (11) mit einer vorbestimmten Vorspannung relativ zur Wand (3) des Bohrlochs (1) eingerichtet ist,
- die Quelleneinrichtung (10) und die Registriereinrichtung (20) verbunden sind und eine serielle Anordnung bilden, deren äußere Form an die innere Form eines Bohrlochs angepasst ist, und/oder
- die Registriereinrichtung (20) mehrere Registriermodule (21) umfasst, wobei die Registriermodule (21) an entgegengesetzten Enden der Seismikeinrichtung angeordnet sind und/oder relativ zu den seismischen Quellen (11) einen verstellbaren Abstand aufweisen.

11. Seismikeinrichtung gemäß Anspruch 10, bei der
- die Quelleneinrichtung (10) und die Registriereinrichtung (20) durch eine Halteeinrichtung (30) verbunden sind, die eine Vielzahl von relativ zueinander drehbar angeordneten Haltekäfigen (31) umfasst, mit denen jeweils eine seismische Quelle (11) oder ein Registriermodul (21) verbunden ist.

12. Seismikeinrichtung gemäß Anspruch 11, bei der
- die Aktuatoren (12) der seismischen Quellen (11) jeweils in einem der Haltekäfige (31) angeordnet sind.

13. Seismikeinrichtung gemäß Anspruch 12, bei der
- der Aktuator (12) schwimmend in dem Haltekäfig (31) angeordnet ist.

14. Seismikeinrichtung gemäß einem der Ansprüche 8 bis 13, bei der
- die Anpresseinrichtung (13) schwimmend in dem Haltekäfig (31) gelagert ist.

## Claims

1. Method for seismic exploration of an environment of a borehole (1) in a geological formation (2), comprising the steps of:
- providing a source device (10) comprising at least two seismic sources (11) in the borehole (1),
- setting a predetermined radiation characteristic of the source device (10), when the at least two seismic sources (11) are located in the borehole (1),
- generating seismic waves propagating in the geological formation (2) with the radiation characteristic formed by the at least two seismic sources (11), and
- registrating of the seismic waves with a registration device (20), wherein
- the setting of the radiation characteristic of the source device (10) comprises:
- setting a spacing of the at least two seismic sources (11) in longitudinal direction in the borehole (1),
- setting an orientation of the at least two seismic sources (11) in azimuthal direction in the borehole (1), and
- controlling the at least two seismic sources (11) such that the seismic waves are generated with vibration sweeps, and that the vibration sweeps of the seismic waves generated with the at least two seismic sources (11) have the same frequency responses and have different phases and/or amplitudes.

2. Method according to claim 1, wherein providing the source device (10) comprises:
- a serial arrangement of the at least two seismic sources (11) along the longitudinal axis of the borehole (1), and/or
- a fixation of the at least two seismic sources (11) each with a predetermined preload relative to the wall (3) of the borehole (1).

3. Method according to claim 2, wherein
- the fixation of the at least two seismic sources (11) is provided, wherein
- the preload is generated with pressing devices (13) provided respectively at the seismic sources (11).

4. Method according to claim 3, wherein
- the generated seismic waves are transmitted into the geological formation (2) via fixing stamps (15) of the pressing devices (13).

5. Method according to one of the preceding claims, wherein the setting of the radiation characteristic of the source device (10) comprises:
- a control of the at least two seismic sources (11) such that the seismic waves are generated with at least one preferred spatial direction of the radiation pattern.

6. Method according to one of the preceding claims, wherein
- the registrating of the seismic waves takes place in the borehole (1), in at least one further borehole and/or on a surface (5) of the geological formation (2),
- the registrating of the seismic waves is carried out with several registration modules (21) of the registration device (20), which are arranged spaced apart from each other in the borehole (1), and/or
- the generating and the registrating of the seismic waves are repeated in each case with a changed radiation characteristic of the source device (10).

7. Method according to one of the preceding claims, comprising the step of
- evaluating the registered seismic waves with a structural reconnaissance of the surroundings of the borehole, wherein the structural reconnaissance is limited to examination areas (4) covered by the radiation characteristic of the source device (10).

8. Seismic device (100) for seismic exploration of an environment of a borehole in a geological formation, comprising:
- a source device (10) comprising at least two seismic sources (11) having a radiation pattern and being positionable in the borehole (1), the source device (10) being adapted to generate seismic waves propagating in the geological formation (2) with the radiation pattern formed by the at least two seismic sources (11),
- a control device (40) with which actuators (12) of the seismic sources (11) can be actuated, the control device (40) being positionable at the surface (5) of the geological formation (2), and
- a registration device (20) with which seismic waves in the vicinity of the borehole (1) can be registered, wherein
- the at least two seismic sources (11) are operable independently of one another, have a settable spacing and are rotatable relative to one another, and wherein
- the source device (10) is configured for setting of the radiation characteristic of the source device (10) and the control device (40) is configured for actuating the at least two seismic sources (11) in such a way that the seismic waves are generated with vibration sweeps and that the vibration sweeps of the seismic waves generated with the at least two seismic sources (11) have the same frequency responses and have different phases and/or amplitudes.

9. Seismic device according to claim 8, wherein the registration device (20) relative to the seismic sources (11)
- has a settable distance, and/or
- is rotatable.

10. Seismic device according to one of claims 8 to 9, wherein
- each of the seismic sources (11) comprises a pressing device (13) being adapted to fix the seismic source (11) with a predetermined preload relative to the wall (3) of the borehole (1),
- the source device (10) and the registration device (20) are connected and form a serial arrangement, the outer shape of which is adapted to the inner shape of a borehole, and/or
- the registration device (20) comprises a plurality of registration modules (21), the registration modules (21) being arranged at opposite ends of the seismic device and/or having an settable distance relative to the seismic sources (11).

11. Seismic device according to claim 10, wherein
- the source device (10) and the registration device (20) are connected by a holding device (30) comprising a plurality of holding cages (31) being rotatably arranged relative to each other, to each of which a seismic source (11) or a registration module (21) is connected.

12. Seismic device according to claim 11, wherein
- the actuators (12) of the seismic sources (11) are each arranged in one of the holding cages (31).

13. Seismic device according to claim 12, wherein
- the actuator (12) is arranged floating in the holding cage (31).

14. Seismic device according to one of claims 8 to 13, wherein
- the pressing device (13) is floatingly mounted in the holding cage (31).

## Revendications

1. Procédé d'exploration sismique d'un environnement d'un trou de forage (1) dans une formation géologique (2), comprenant les étapes :
- de mise à disposition, dans le trou de forage (1), d'un dispositif à sources (10) qui comprend au moins deux sources sismiques (11),
- de réglage d'une caractéristique d'émission prédéfinie du dispositif à sources (10) quand les au moins deux sources sismiques (11) se trouvent dans le trou de forage (1),
- de production d'ondes sismiques qui se propagent dans la formation géologique (2) avec la caractéristique d'émission formée par les au moins deux sources sismiques (11), et
- d'enregistrement des ondes sismiques avec un dispositif d'enregistrement (20),
dans lequel
- le réglage de la caractéristique d'émission du dispositif à sources (10) comprend :
- un réglage d'une distance des au moins deux sources sismiques (11) dans le sens longitudinal dans le trou de forage (1),
- un réglage d'une orientation des au moins deux sources sismiques (11) dans une direction azimutale dans le trou de forage (1), et
- un pilotage des au moins deux sources sismiques (11) de telle manière que les ondes sismiques sont produites avec des systèmes de balayage à vibrations, et que les systèmes de balayage à vibrations des ondes sismiques qui sont produites avec les au moins deux sources sismiques (11) présentent les mêmes réponses de fréquence et présentent des phases et/ou des amplitudes différentes.

2. Procédé selon la revendication 1, où la mise à disposition du dispositif à sources (10) comprend :
- un agencement en série des au moins deux sources sismiques (11) le long de l'axe longitudinal du trou de forage (1), et/ou
- une fixation des au moins deux sources sismiques (11) respectivement avec une précontrainte prédéfinie par rapport à la paroi (3) du trou de forage (1).

3. Procédé selon la revendication 2, où
- la fixation des au moins deux sources sismiques (11) est prévue, dans lequel
- la précontrainte est produite avec des dispositifs de compression (13) qui sont prévus respectivement sur les sources sismiques (11).

4. Procédé selon la revendication 3, où
- les ondes sismiques produites sont transmises dans la formation géologique (2) par l'intermédiaire de poinçons de fixation (15) des dispositifs de compression (13) .

5. Procédé selon l'une quelconque des revendications précédentes, où le réglage de la caractéristique d'émission du dispositif à sources (10) comprend :
- un pilotage des au moins deux sources sismiques (11) de telle manière que les ondes sismiques sont produites avec au moins une direction spatiale de prédilection de la caractéristique d'émission.

6. Procédé selon l'une quelconque des revendications précédentes, où
- l'enregistrement des ondes sismiques dans le trou de forage (1) est effectué dans au moins un autre trou de forage et/ou sur une surface (5) de la formation géologique (2),
- l'enregistrement des ondes sismiques est effectué avec plusieurs modules d'enregistrement (21) du dispositif d'enregistrement (20), qui sont disposés de manière espacée les uns des autres dans le trou de forage (1), et/ou
- la production et l'enregistrement des ondes sismiques sont répétés respectivement avec une caractéristique d'émission modifiée du dispositif à sources (10).

7. Procédé selon l'une quelconque des revendications précédentes, avec l'étape
- d'évaluation des ondes sismiques enregistrées avec une exploration structurelle de l'environnement du trou de forage, dans lequel l'exploration structurelle est limitée à des zones d'analyse (4) qui sont couvertes par la caractéristique d'émission du dispositif à sources (10).

8. Dispositif sismique (100) pour l'exploration sismique d'un environnement d'un trou de forage dans une formation géologique, comprenant :
- un dispositif à sources (10) avec au moins deux sources sismiques (11), qui présente une caractéristique d'émission et qui peut être positionné dans le trou de forage (1),
dans lequel le dispositif à sources (10) est réalisé pour produire des ondes sismiques qui se propagent dans la formation géologique (2) avec la caractéristique d'émission formée par les au moins deux sources sismiques (11) ,
- un dispositif de commande (40) avec lequel des actionneurs (12) des sources sismiques (11) peuvent être actionnés, dans lequel le dispositif de commande (40) peut être positionné sur la surface (5) de la formation géologique (2), et
- un dispositif d'enregistrement (20) avec lequel des ondes sismiques peuvent être enregistrées dans l'environnement du trou de forage (1),
dans lequel
- les au moins deux sources sismiques (11) peuvent être actionnées indépendamment l'une de l'autre, présentent une distance ajustable et peuvent tourner l'une par rapport à l'autre, et dans lequel
- le dispositif à sources (10) est configuré pour un réglage de la caractéristique d'émission du dispositif à sources (10) et le dispositif de commande (40) est configuré pour un pilotage des au moins deux sources sismiques (11) de telle manière que les ondes sismiques sont produites avec des systèmes de balayage à vibrations, et que les systèmes de balayage à vibrations des ondes sismiques, qui sont produites avec les au moins deux sources sismiques (11), présentent les mêmes réponses de fréquence et présentent des phases et/ou amplitudes différentes.

9. Dispositif sismique selon la revendication 8, où le dispositif d'enregistrement (20)
- présente une distance ajustable, et/ou
- peut être tourné
par rapport aux sources sismiques (11).

10. Dispositif sismique selon l'une quelconque des revendications 8 à 9, où
- chacune des sources sismiques (11) présente un dispositif de compression (13) qui est mis au point pour la fixation de la source sismique (11) avec une précontrainte prédéfinie par rapport à la paroi (3) du trou de forage (1),
- le dispositif à sources (10) et le dispositif d'enregistrement (20) sont reliés et forment un agencement en série dont la forme extérieure est adaptée à la forme intérieure d'un trou de forage, et/ou
- le dispositif d'enregistrement (20) comprend plusieurs modules d'enregistrement (21), dans lequel les modules d'enregistrement (21) sont disposés sur des extrémités opposées du dispositif sismique et/ou présentent une distance ajustable par rapport aux sources sismiques (11).

11. Dispositif sismique selon la revendication 10, où
- le dispositif à sources (10) et le dispositif d'enregistrement (20) sont reliés par un dispositif de maintien (30), qui comprend une multitude de cages de maintien (31) disposées de manière à pouvoir tourner les unes par rapport aux autres, auxquelles respectivement une source sismique (11) ou un module d'enregistrement (21) est reliée ou relié.

12. Dispositif sismique selon la revendication 11, où
- les actionneurs (12) des sources sismiques (11) sont disposés respectivement dans une des cages de maintien (31).

13. Dispositif sismique selon la revendication 12, où
- l'actionneur (12) est disposé de manière flottante dans la cage de maintien (31).

14. Dispositif sismique selon l'une quelconque des revendications 8 à 13, où
- le dispositif de compression (13) est monté de manière flottante dans la cage de maintien (31).
